# EUROPÄISCHE PATENTSCHRIFT

(11) **EP 2 119 345 B1**
(45) Veröffentlichungstag und Bekanntmachung des Hinweises auf die Patenterteilung: **16.05.2012**
(21) Anmeldenummer: 09001394.7
(22) Anmeldetag: 02.02.2009
(51) Int. Cl.: A01K 5/00

(54) **Futtermischer**
Animal feed mixer
Mélangeur d'aliments

(30) Priorität: 06.05.2008 DE 202008006184 U
(43) Veröffentlichungstag der Anmeldung: 18.11.2009
(73) Patentinhaber: Trioliet Mullos B.V., 7575 BE Oldenzaal (NL)
(72) Erfinder: Liet, Cornelis Hendricus, 7581 PJ Losser (NL)
(74) Vertreter: Grünecker, Kinkeldey, Stockmair & Schwanhäusser

(56) Entgegenhaltungen:
- US-A- 5 601 362
- US-A- 5 615 839
- US-A1- 2007 274 151
- US-A1- 2008 101 154

## Beschreibung

Die Erfindung bezieht sich auf einen Futtermischer der im Oberbegriff von Anspruch 1 erläuterten Art.

Ein derartiger Futtermischer ist aus der US 2008/0101154 bekannt. Der bekannte Futtermischer enthält einen Strömungsleitkörper mit einer auf das Futter einwirkenden Leitfläche. Die Leitfläche ist so angeordnet, dass sie sich im Wesentlichen radial nach innen erstreckt und nach vorne, d.h. in Drehrichtung vorlaufend, weist. Der Strömungsleitkörper hat eine Spitze, die im Wesentlichen auf die Drehachse der Mischschnecke gerichtet ist. Zweck des Strömungsleitkörpers ist es, das Mischgut nach innen, in Richtung auf den Mittelpunkt der Mischschnecke zu fördern. Zwar soll auch der Austrag durch die Wandungsöffnung verbessert werden, dies jedoch wahrscheinlich nur deshalb, weil der Strömungsleitkörper als Strömungshindernis konzipiert ist, der eine "Bugwelle" von Mischgut vor sich herschiebt, wodurch dann zwangsläufig mehr Material durch die Ausgabeöffnung gedrückt wird. Die Effektivität des Austrages durch die Ausgabeöffnung ist somit der Strömungsverstärkung in Richtung auf die Drehachse stark untergeordnet.

Ein aus der US-A-5 456 416 bekanten Futtermischer ist als Futtermischwagen ausgebildet und weist einen Behälter mit einer darin angeordneten Mischschnecke auf, die um eine im Wesentlichen senkrechte Achse drehend angetrieben ist. Die Mischschnecke ist in ihrem Durchmesser über die überwiegende axiale Höhe wesentlich kleiner als der Durchmesser des Bodens und ist an ihrem Umfang mit Messerelementen versehen. Lediglich der erste Gang der Mischschnecke über dem Boden ist, sich an die vorlaufende Kante der Mischschnecke anschließend, stark verbreitert, so dass die vorlaufende Kante und etwa ein Viertel des gesamten Winkelabstandes des ersten Gangs der Schnecke den Boden vollständig überstreicht. Der Bereich hinter der vorlaufenden Kante ist somit als Auffangplatte ausgebildet, auf die das nach oben geförderte und von oben durch die Mischschnecke abgegebene Futter fällt und abgeschleudert werden kann. Auf dieser Auffangplatte ist ein Strömungsleitkörper angeordnet, der eine in Richtung der Drehachse nach hinten geneigte Leitfläche enthält, deren auf der Auffangplatte verlaufende Basiskante mit der vorlaufenden Kante einen spitzen Winkel einschließt und sich im Wesentlichen in die gleiche Richtung wie die vorlaufende Kante erstreckt, wobei der radial äußere Bereich der Leitfläche in Drehrichtung gegenüber dem radial innenliegenden Bereich der Leitfläche vorläuft. Zweck dieser Leitfläche ist es, das Futter in Richtung auf die Mischschnecke zu leiten, um das Mischen zu erleichtern.

Mischbehälter, insbesondere die hier in Rede stehenden Futtermischwagen, weisen eine in der Nähe des Bodens angeordnete Ausgabeöffnung auf, durch die das Material aus dem Mischbehälter herausgedrückt werden muss. Für eine optimale Mischung des Futters hat sich jedoch eine Betriebsweise der Mischschnecke als zweckmäßig erwiesen, bei der das sich am Boden ansammelnde Futter durch die vorlaufende Kante aufgenommen und durch die Mischschnecke nach oben transportiert wird. Am oberen Bereich der Mischschnecke kommt das Futter frei und fällt wieder nach unten in Richtung Boden. Dadurch bildet sich eine nach unten gerichtete Strömung in der Nähe der Behälterwände und damit auch oberhalb der Tür. Diese nach unten gerichtete Strömung muss vom ausgebenden Material durchbrochen werden, um eine Ausgabe des Materials sicherzustellen. Dies ist oft nicht einfach, insbesondere bei stark getrocknetem, langfasrigem Futtermittel, wie dies beispielsweise Heu ist.

Der Erfindung liegt somit die Aufgabe zugrunde, einen Futtermischer mit einer verbesserten Ausgabe des Futters bereitzustellen.

Die Aufgabe wird durch die im Anspruch 1 angegebenen Merkmale gelöst.

Durch die erfindungsgemäße Ausgestaltung wird eine Leitfläche bereitgestellt, mit der das Futter besser durch die Ausgabeöffnung gedrückt werden kann, ohne den Materialfluss zur Mischschnecke hin mehr als notwendig zu stören.

Vorteilhafte Weiterbildungen der Erfindung sind den Unteransprüchen zu entnehmen.

Vorteilhafterweise ist die Leitfläche so schräggestellt, dass sie an der Spitze den kleinsten Abstand zur Achse aufweist. Dadurch wird eine nachdrückliche sanfte Richtungsänderung des Futters in Richtung auf die Ausgabeöffnung erreicht.

Die Anordnung der Leitfläche, im Wesentlichen ausgerichtet auf die Mitte der vorlaufenden Kante, hat sich als guter Kompromiss zwischen den auszugebenden Mengen an Futter und den noch im Mischvorgang verbleibenden Mengen erwiesen. Darüber hinaus wird dadurch ein ausreichender Abstand zur Behälterwandung, zumindest im vorderen Bereich des Strömungsleitkörpers geschaffen, so dass das Material nicht zu stark verdichtet wird.

Eine bis zur radial außen liegenden Begrenzungskante der Tragfläche reichende Leitfläche verbessert den Futteraustrag durch die Ausgabeöffnung, da dabei ein graduell ansteigender Druck auf das Material mit einer in Richtung der Behälterwand wirkenden Komponente erzeugt wird.

Der Strömungsleitkörper kann bevorzugt eine weitere, radial innen liegende Leitfläche enthalten, die das nicht von der ersten Leitfläche nach außen gedrückte Futter sicher im Bereich der Mischschnecke hält und somit die Mischleistung aufrechterhält.

Der Strömungsleitkörper kann weiterhin eine Deckfläche enthalten, die das auf ihr aufgleitende Futter lediglich von der Tragfläche anhebt und somit der Lockerung dient.

Bevorzugt sind beide Leitflächen auf einem keilförmig ausgebildeten Strömungsleitkörper zusammengefasst, wobei sich an der Spitze des Strömungsleitkörpers entscheidet, welcher Anteil des Futters in Richtung Mischschnecke und welcher Anteil des Futters in Richtung Behälteröffnung gedrückt wird.

Durch die ebene Ausgestaltung der Leitfläche wird dafür gesorgt, dass sie, auch wenn sie im Wesentlichen in Drehrichtung weist, doch radial gerichtete Komponenten der Krafteinleitung in das Futter erzeugt, so dass einerseits die Herstellung der Leitflächen erleichtert und andererseits deren Wirkung erhöht wird.

Es ist jedoch auch möglich, die erste Leitfläche gekrümmt auszubilden, was zu einer besonders sanften Handhabung des Futters führt.

Zur Anpassung an unterschiedliche Mischaufgaben und/oder unterschiedliche Konsistenzen des zu mischenden Gutes können die Strömungsleitkörper einstellbar ausgebildet sein.

Die Erfindung eignet sich besonders für Futtermischer, die außer mit dem Strömungsleitkörper auch mit am Umfang der Mischschnecke angeordneten Mischelementen versehen ist, da beide optimal zusammenwirken.

Der erfindungsgemäße Strömungsleitkörper kann bevorzugt in konstruktiv einfacher Weise aus einem winkelförmig gebogenem Blechzuschnitt hergestellt werden.

Die Erfindung wird nachfolgend anhand eines Ausführungsbeispiels näher erläutert. Es zeigen:
- Fig. 1: eine perspektivische Darstellung eines erfindungsgemäßen Futtermischers,
- Fig. 2: die Seitenansicht der Fig. 1,
- Fig. 3: die Draufsicht auf den Futtermischer gemäß Fig. 1.
- Fig. 4: die Draufsicht nur auf den Boden des Futtermischers gemäß Fig. 1,
- Fig. 5: eine perspektivische Darstellung eines Strömungsleitkörpers,
- Fig. 6: eine Ansicht ähnlich Fig. 1 eines weiteren Ausführungsbeispiels eines erfindungsgemäßen Futtermischers,
- Fig. 7: eine Draufsicht auf eine Mischschnecke mit einem einstellbaren Strömungsleitkörper,
- Fig. 8: eine perspektivische Darstellung einer Mischschnecke mit einem einstellbaren Strömungsleitkörper,
- Fig. 9: eine perspektivische Darstellung einer Mischschnecke mit einem abgewandel- ten Strömungsleitkörper,
- Fig. 10: die Draufsicht auf Fig. 9,
- Fig. 11: eine perspektivische Darstellung einer Mischschnecke mit einem abgewandel- ten Strömungsleitkörper,
- Fig. 12: eine perspektivische Darstellung mit einem abgewandelten Strömungsleitkörper,
- Fig. 13: eine Vorderansicht einer Mischschnecke mit einem abgewandelten Strömungsleitkörper,
- Fig. 14: eine perspektivische Darstellung der Mischschnecke nach Fig. 13.

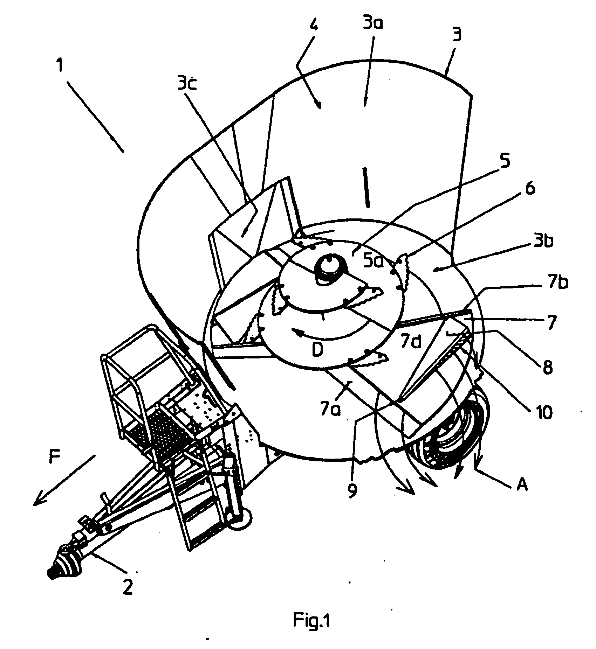

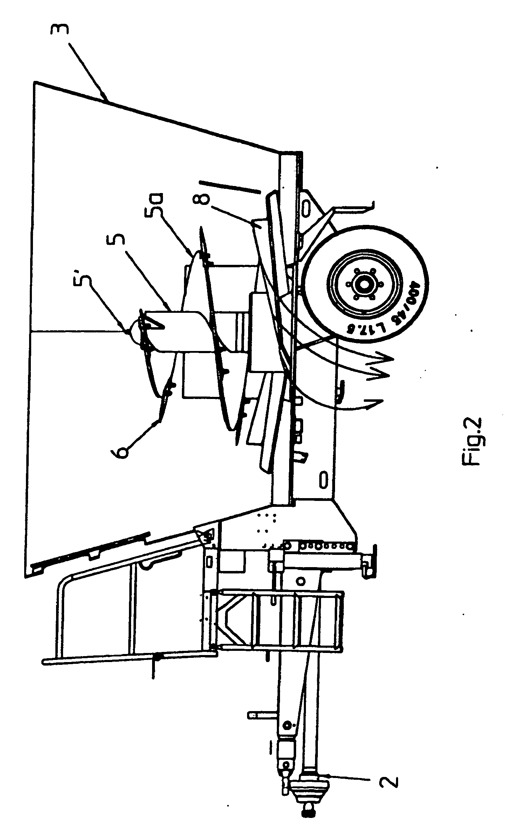

Aus den Figuren 1 bis 4 ist ein Futtermischer 1 ersichtlich, der im dargestellten Ausführungsbeispiel als Futtermischwagen ausgebildet ist, der über eine Zugdeichsel 2 an ein Zugfahrzeug angekoppelt werden und in Fahrtrichtung F verfahren werden kann. Derartige Futtermischer sind in großer Zahl bekannt, beispielsweise aus der EP 1 481 721, auf die hiermit Bezug genommen wird.

Der Futtermischer 1 enthält einen Behälter 3 mit einer Seitenwand 3a und einem Boden 3b. Der dem Betrachter zugewandte Teil der Seitenwand 3a ist in Fig. 1 weggelassen worden, um das Innere zu zeigen. Die Seitenwand 3a steigt von einem im Wesentlichen kreisförmigen Boden 3b trichterförmig nach oben außen zu einem im Wesentlichen langovalen Querschnitt einer oberen Einfüllöffnung 4 an, wobei die Einfüllöffnung 4 flächenmäßig größer ist als der Boden 3b.

An geeigneter Stelle, meist seitlich in Fahrtrichtung F gesehen, ist in der Seitenwand 3a wenigstens eine Ausgabeöffnung 3c vorgesehen, die durch eine geeignete Klappe oder Tür verschlossen werden kann. Aus dieser Öffnung 3c wird das in die Einfüllöffnung 4 eingebrachte Futter dosiert ausgegeben.

Im Inneren des Behälters 3 befindet sich eine der üblichen Mischschnecken 5, die um eine senkrechte Achse 5' in Richtung des Pfeils D drehend angetrieben wird. Die Mischschnecke 5 enthält eine einzige Wendel 5a, die derart gewunden ist, dass das Material vom Boden 3b nach oben transportiert wird. Die Wendel 5a ist an ihrem Umfang mit Messerelementen 6 üblicher Konstruktion versehen, die nach außen vorstehen. Im dargestellten Ausführungsbeispiel ist der Maximaldurchmesser Dₘₐₓ der Schnecke 5 kleiner als der Durchmesser des Bodens 3b, und der Mischschnecke 5 ist wenigstens eine Verbreiterung 7 zugeordnet, die unter der Schnecke 5 vorsteht und den gesamten Durchmesser des Bodens 3b überstreicht. Die Verbreiterung 7 ist im dargestellten Ausführungsbeispiel etwa kreissektor- oder tortenstückförmig ausgebildet und enthält eine vorlaufende Kante 7a, eine nachlaufende Kante 7b, eine Umfangskante 7c und eine nach oben freiliegende Tragfläche 7d. Die Verbreiterung 7 ist im dargestellten Ausführungsbeispiel als Auffangplatte ausgebildet, die dem dem Boden 3b am nächsten liegenden Anfang der Schnecke 5 zugeordnet ist, und bildet bevorzugt eine Verlängerung dieses Anfangs. Im dargestellten Ausführungsbeispiel sind zwei sich im Wesentlichen diametral gegenüberliegende Auffangplatten mit jeweils einer Tragfläche 7d vorgesehen, die identisch ausgebildet sind, so dass nachfolgend nur jeweils eine der Platten beschrieben wird.

Auf wenigstens einer der Tragflächen 7d ist ein Strömungsleitkörper 8 vorgesehen, der über die Tragfläche 7d vorsteht und im dargestellten Ausführungsbeispiel ortsfest befestigt ist. Der Strömungsleitkörper 8 enthält eine mit einer Spitze 9 auf die vorlaufenden Kante 7a weisende und bevorzugt etwa in der radialen Mitte zwischen der Mischschnecke 5 und der Seitenwand 3a angeordnete erste Leitfläche 10. Die Spitze 9 liegt an oder in einen geringfügigen Abstand unmittelbar hinter der vorlaufenden Kante 7a. Die Leitfläche 10 beginnt an der Spitze 9 mit einer Höhe h= 0 über der Tragfläche 7d, verläuft in Drehrichtung D von der vorlaufenden Kante 7a nach hinten und steigt dabei an, d. h. weist eine sich vergrößernde Breite auf, die zu einer sich vergrößernden Höhe h über der Tragfläche 7d führt. Die Leitfläche 10 ist im Wesentlichen dreieckförmig und steht im Wesentlichen aufrecht auf der Tragfläche 7d. Der Begriff "im Wesentlichen aufrecht" soll eine senkrechte Erstreckung der Leitfläche 10 im Winkel von 90°, jedoch auch leicht in Richtung der Drehachse oder von ihr weg geneigte Anordnungen umfassen, die jedoch den angestrebten Zweck nicht verhindern, Im dargestellten Ausführungsbeispiel trifft die Leitfläche 10 im Wesentlichen senkrecht auf die im Wesentlichen radial verlaufende Kante 7a; je nach Winkelstellung der Kante 7a bezüglich des Radius der Schnecke 5, können sich jedoch auch andere Winkel ergeben. Die Leitfläche 10 weist an ihrer Spitze 9 den geringsten Abstand zur Achse 5' auf, der sich nach hinten, d. h. entgegen der Drehrichtung vergrößert, und erstreckt sich bevorzugt von der vorlaufenden Kante 7a bis zur radial äußeren Umfangskante 7c. Die Leitfläche 10 ist bevorzugt eine ebene Fläche.

Der Strömungsleitkörper 8 enthält eine zweite Leitfläche 11, die ebenfalls eben und dreieckförmig ist, an der Spitze 9 beginnt und sich nach hinten, d. h. entgegen der Drehrichtung D, verbreitert. Die zweite Leitfläche 11 weist in Richtung der Drehachse 5' und ist bezüglich der Tragfläche 7d von radial innen nach radial außen geneigt; bevorzugt unter einem Winkel zwischen etwa 10 bis 60°, insbesondere bevorzugt 25°. Darüber hinaus ist die zweite Leitfläche 11 so angeordnet, dass sie sich im Wesentlichen tangential zur Drehachse 5' erstreckt.

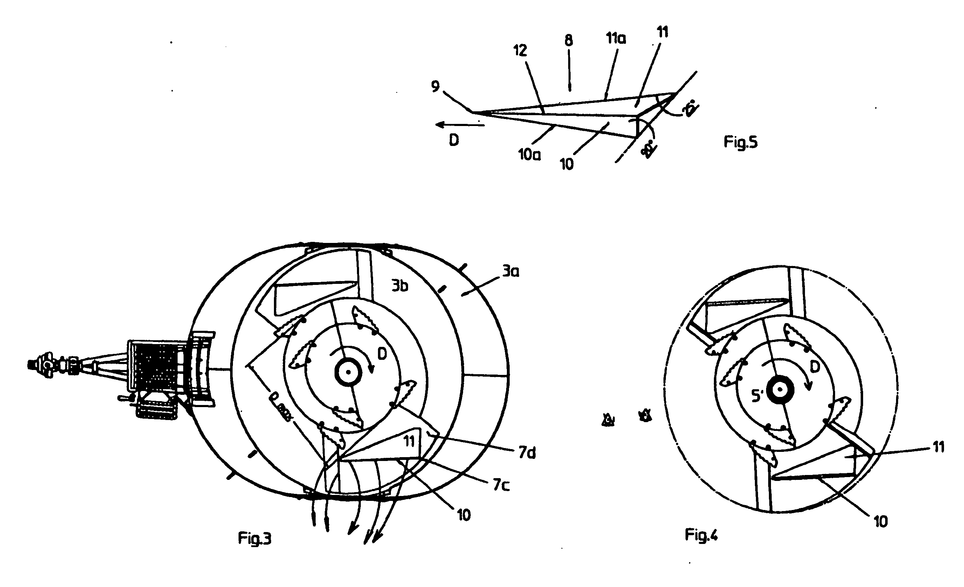

Wie insbesondere Fig. 5 zeigt, ist der Strömungsleitkörper keilförmig ausgebildet, wobei die beiden Leitflächen 10, 11 jeweils eine Basislinie 10a, 11a aufweisen und in einer gemeinsamen Firstlinie 12 zusammenlaufen. Die Basislinien 10a, 11a und die Firstlinie 12 laufen in der Spitze 9 zusammen. Der Strömungsleitkörper 8 weist somit einen Querschnitt auf, der dreieckförmig ausgebildet ist und sich von der Spitze 9 entgegen der Drehrichtung D nach hinten vergrößert und er weist einen Längsschnitt auf, der ebenfalls dreieckförmig ist und sich von einer Basislinie 10a bis zur Firstlinie 12 zunächst vergrößert und von der Firstlinie 12 zur gegenüberliegenden Basislinie 10a wieder verkleinert.

Wie Fig. 5 zeigt, kann der Strömungsleitkörper 8 in einfacher Weise aus einem Blechzuschnitt winkelförmig gebogen werden.

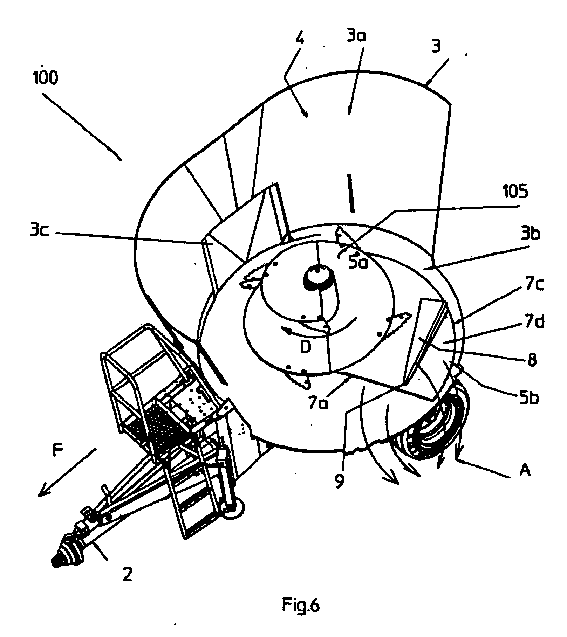

Fig. 6 zeigt ein weiteres Ausführungsbeispiel 100 eines erfindungsgemäßen Futtermischers, der bis auf die nachfolgend beschriebenen Einzelheiten dem Futtermischer gemäßfig. 1 entspricht. Gleiche bzw. vergleichbare Bauteile wurden mit den gleichen Bezugszeichen gekennzeichnet und nicht nochmals erläutert.

Der Futtermischer 100 unterscheidet sich vom Futtermischer 1 durch eine abgewandelt ausgebildete Mischschnecke 105. Die Mischschnecke 105 ist an ihrem untersten Bereich mit einer Verbreiterung der Wendel versehen. Aber auch der verbreiterte unterste Bereich 5b der Wendel enthält die vorlaufende Kante 7a, die Umfangskante 7c, die Tragfläche 7d. Allerdings ist die Mischschnecke 105 mit nur einer Verbreiterung 5b versehen und enthält somit nur einen Strömungsleitkörper 8. Auch der verbreiterte unterste Bereich 5b überstreicht mit seiner vorlaufenden Kante 7a den gesamten Durchmesser des Bodens 3b.

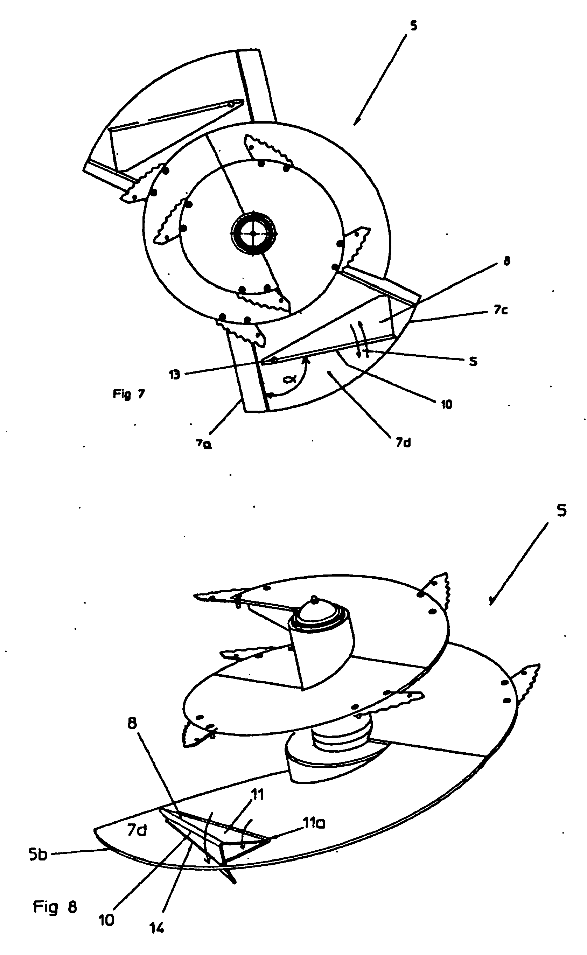

In den bislang beschriebenen Ausführungsbeispielen ist der oder die Strömungsleitkörper 8 ortsfest mit der Tragfläche 7d verbunden. Es ist jedoch auch möglich, den Strömungsleitkörper 8 einstellbar auszubilden. Beispiele von einstellbaren Strömungsleitkörpem sind den Figuren 7 und 8 zu entnehmen.

Fig. 7 zeigt anhand des Futtermischers 1 aus Fig. 1 einen schwenkbar auf der Tragfläche 7d einer Aufnahmeplatte 7 befestigten Leitkörper 8. Der Leitkörper 8 ist in diesem Ausführungsbeispiel eine vertikal auf der Tragfläche 7d stehende Drehachse 13 in Richtung der Pfeile S verschwenkbar, so dass der Winkel α, den die Leitfläche 10 mit der vorlaufenden Kante 7a einschließt, verändert werden kann. Im dargestellten Ausführungsbeispiel beträgt dieser Winkel α, wie auch bei den bislang beschriebenen Ausführungsbeispielen, 90° t 10°, kann jedoch auch auf andere Winkel eingestellt werden, wenn dies durch die Art des zu behandelnden Gutes notwendig ist.

Fig. 8 zeigt eine Mischschnecke 5 mit verbreitertem unterem Bereich 5b, deren Strömungsleitkörper 8 in seiner Höhe über der Tragfläche 7d in Richtung der Pfeile H einstellbar ist. Zu diesem Zweck taucht der Strömungsleitkörper 8 oder zumindest die Leitfläche 10 in eine Öffnung 14 in der Tragfläche 7d ein und kann dort in einer Stellung fixiert werden, die der gewünschten Höhe des Strömungskörpers 8, d.h. seines Überstandes über die Tragfläche 7d, entspricht. Es kann der gesamte Strömungsteitkörper in die Öffnung 14 hinein- und aus ihr herausverstellt werden, der Strömungsleitkörper 8 kann jedoch auch, bevorzugt entlang der Basislinie 11a, mit einem Gelenk versehen sein, und um dieses Gelenk so verschwenkt werden, dass die Leitfläche 10 mehr oder weniger tief in die Öffnung 14 eintaucht.

Es ist weiterhin möglich, Strömungsleitkörper der unterschiedlichsten Form einzusetzen, wobei jedoch als gemeinsames wesentliches Merkmal die bei 0 beginnende Höhe des Strömungsleitkörpers an der der vorlaufenden Kante 7a nächstgelegenen Stelle vorhanden sein sollte.

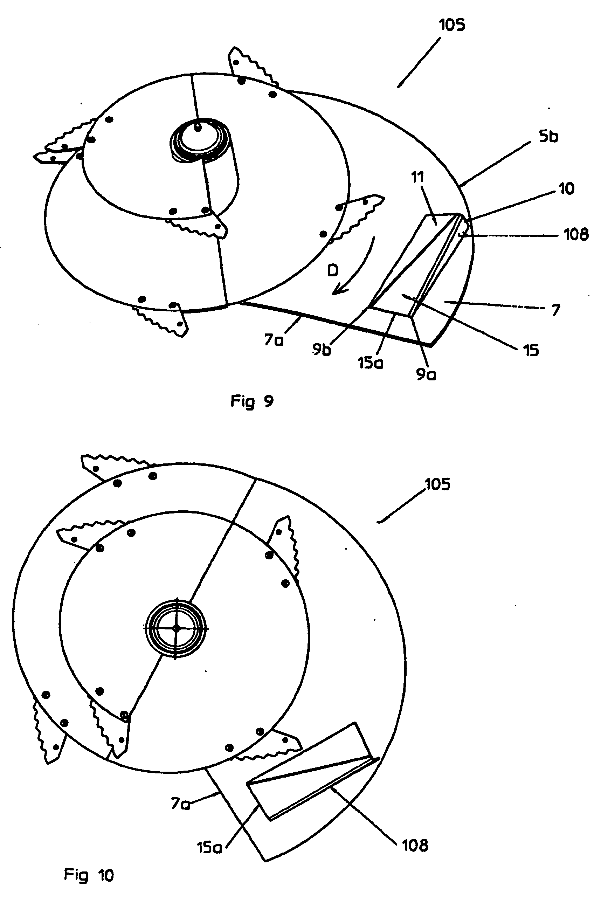

Das Ausführungsbeispiel der Figuren 9 und 10 basiert auf der Mischschnecke 105 mit verbreitertem unterem Bereich 5b und enthält einen Strömungsleitkörper 108, der die Leitflächen 10 und 11 enthält, die im Wesentlichen wie im vorangegangenen Ausführungsbeispiel ausgebildet sind, jedoch zu einem rechteckigen Grundriss zusammengesetzt sind. Die beiden Leitflächen 10 und 11 werden über eine Deckfläche 15 miteinander verbunden, die dreieckförmig ausgebildet ist und eine Basislinie 15a aufweist, die in Drehrichtung D vorlaufend flach auf der Tragfläche 7d liegt und somit eine Spitzenlinie 15a bildet. Die Linie 15a weist eine Höhe 0 über der Tragfläche 7d auf und verbindet eine Spitze 9a der Leitfläche 10 mit einer Spitze 9b der Leitfläche 11. Wenn die vorlaufende Kante 7a radial verläuft, verläuft die Spitzenlinie 15a im Wesentlichen parallel zur vorlaufenden Kante 7a, während die Anordnung der Leitfläche 10 der Anordnung der Leitfläche 10 beim Strömungskörper 8 entspricht.

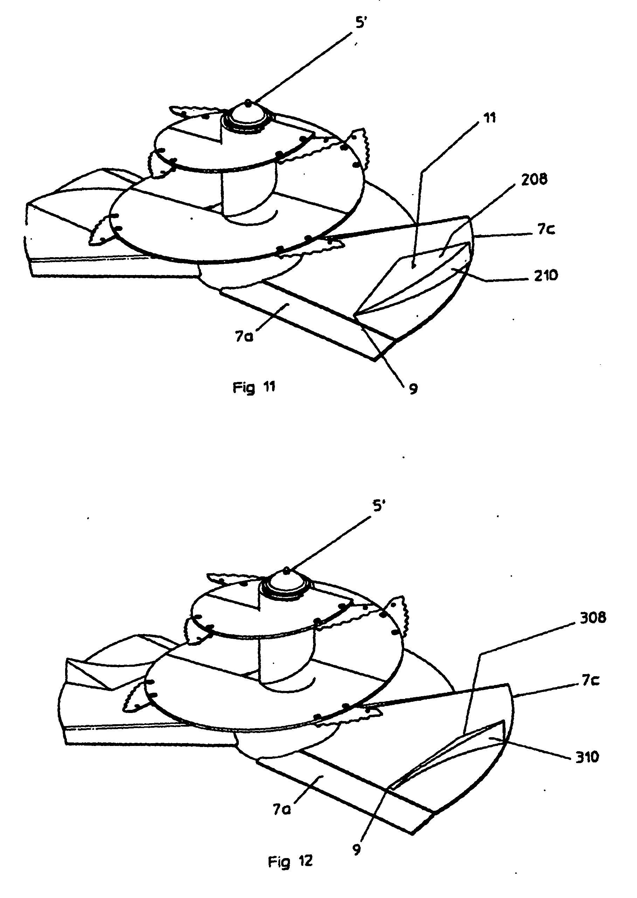

Fig. 11 zeigt einen weiteren Strömungsleitkörper 208, der sich vom Strömungsleitkörper 8 bzw. 108 durch eine gekrümmte, radial außen liegende Strömungsleitfläche 210 unterscheidet. Die Strömungsleitflöche 210 ist gekrümmt, und zwar mit nach außen weisender Krümmung. Der Krümmungsradius der Leitfläche 210 kann größer oder kleiner sein als der Radius der Mischschnecke 5. Abgesehen von anderen, konstruktionsbedingten Dimensionen, beispielsweise einer in ihrem nachlaufenden Bereich stark verbreiterten Leitfläche 11, entspricht die Anordnung und Ausgestaltung des Strömungsleitkörpers 208 analog denen des Strömungsleitkörpers 8.

Fig. 12 zeigt ein weiteres Ausführungsbeispiel eines Strömungsteitkörpers 208, der sich vom Strömungsleitkörper 8 durch eine gekrümmte, radial außen liegende Leitfläche 310 unterscheidet. Im Gegensatz zur Leitfläche 210 ist jedoch die Leitfläche 310 nach innen, d.h. in Richtung auf die Drehachse 5' gekrümmt. Der Krümmungsradius sollte wiederum so gewählt werden, dass die Spitze 9 auf die vorlaufende Kante 7a stößt und der rückwärtige Bereich an der Umfangskante 7c endet.

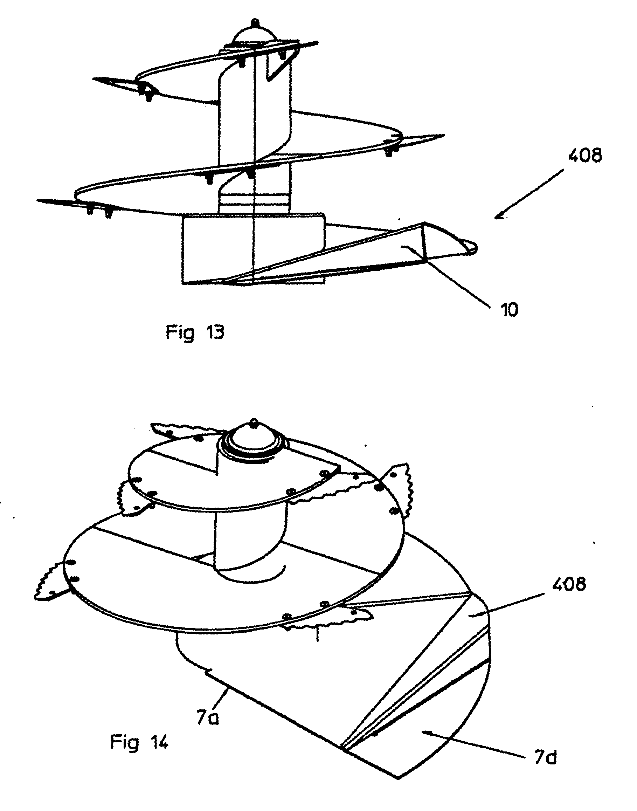

Die Fig. 13 und 14 zeigen ein weiteres Ausführungsbeispiel eines Strömungsleitkörpers 408, der sich vom Strömungsleitkörper 8 nur durch seine einstückige Herstellung mit einer Verbreiterung, sei es die Auffangplatte 7 oder der verbreiterte Bereich 5b oder, wie dargestellt, eine Ansatzplatte 407, unterscheidet. Der Strömungsleitkörper 408 wird durch ein dreieckförmiges Auffalten der Verbreiterung erzeugt, wobei die Auffaltung wiederum über der Tragfläche 7d übersteht. Die Form und Anordnung sowie die allgemeinen Abmessungen entsprechen etwa denen des Strömungsleitkörpers 8.

Beim Betrieb des erfindungsgemäßen Futtermischers 1 wird das Futter durch die Einfüllöffnung 4 in den Behälter 3 gegeben und fällt nach unten auf den Boden 3b. Die Mischschnecke 5 wird in Drehrichtung D angetrieben und bewegt die Tragfläche(n) 7d ebenfalls in Drehrichtung D. Die vorlaufende Kante 7a der Tragfläche 7d greift unter das auf dem Boden 3b liegende Futter und hebt dieses auf die Tragfläche 7d. Dort dringt der vorlaufende Bereich (Spitze 9 oder Spitzenlinie 15a) des Strömungsleitkörpers in das Futter ein und hebt dieses an. Gleichzeitig erzeugt die erste Strömungsleitfläche 10 eine radial nach außen gerichtete Komponente, die das Futter, wie durch die Pfeile A angedeutet, radial nach außen drückt. Gleichzeitig wird das Futter durch die zweite Leitfläche 11 in Richtung der Mischschnecke 5 geleitet, durch die Mischschnecke 5 senkrecht nach oben gefördert und fällt von oben wieder nach unten, so dass sich eine Abwärtsströmung entlang der Seitenwand 3a des Behälters 3 ergibt. Die nach außen gerichtete Komponente A wirkt dieser Abwärtsbewegung entgegen, jedoch nicht so stark, dass die Abwärtsbewegung verhindert wird. Die Strömung A ist jedoch stark genug, um eine gleichmäßige Dosierung durch die Öffnung 5 zu gewährleisten, sobald diese geöffnet wird.

In Abwandlung der beschriebenen und gezeichneten Ausführungsbeispiele können die Einzelheiten der verschiedenen Figuren untereinander ausgetauscht werden. Auch kann der Strömungsleitkörper unter Umständen nur die erste, radial außenliegende Leitfläche enthalten. Die beiden Leitflächen können auch gleich groß und ggf. auch unter der gleichen Neigung zur Tragfläche angeordnet sein. Die Erfindung kann darüber hinaus bei allen Mischern bekannter Bauart und für die unterschiedlichsten Formen der Mischschnecke (zylindrisch oder konisch oder dgl.) eingesetzt werden.

## Patentansprüche

1. Futtermischer (1) mit einem Behälter (3) mit einer Seitenwand (3a) und einem Boden (3b), einer Mischschnecke (5), die um eine im Wesentlichen senkrecht zum Boden (3b) verlaufende Achse (5') drehbar ist, und mit einer der Mischschnecke (5) zugeordneten Tragfläche (7d), die mit einer vorlaufenden Kante (7a) den Boden (3b) überstreicht, und von der ein Strömungsleitkörper (8, 108, 208, 308, 408) mit einer Leitfläche (10, 210, 310) und einer Spitze (9) nach oben vorsteht, **dadurch gekennzeichnet, dass** die Leitfläche (10, 210, 310) bezüglich der Achse (5') im Wesentlichen radial nach außen weist und die Spitze (9) auf die vorlaufende Kante (7a) gerichtet ist und auf der Tragfläche (7d) aufliegt, und der Strömungsleitkörper (8, 108, 208, 308, 408) mit sich vergrößernder Höhe (h) über der Tragfläche (7d) in Drehrichtung (D) nach hinten verläuft.

2. Futtermischer nach Anspruch 1, **dadurch gekennzeichnet, dass** die Leitfläche (10, 210, 310) an der Spitze (9) den kleinsten Abstand zur Achse (5') aufweist.

3. Futtermischer nach Anspruch 1 oder 2, **dadurch gekennzeichnet, dass** die Leitfläche (10, 210, 310) im Wesentlichen auf die Mitte der vorlaufenden Kante (7a) weist.

4. Futtermischer nach einem der Ansprüche 1 bis 3, **dadurch gekennzeichnet, dass** die Leitfläche (10, 210, 310) von der vorlaufenden Kante (7a) im Wesentlichen bis zu einer radial außenliegenden Begrenzungskante (7c) der Tragfläche (7d) reicht.

5. Futtermischer nach einem der Ansprüche 1 bis 4, **dadurch gekennzeichnet, dass** der Strömungsleitkörper (8) eine weitere Leitfläche (11) aufweist, die durch eine in einer Spitze (9) zusammenlaufende Basis- und Firstlinie (11a, 12) definiert ist, zur Drehachse-(5') weist, bezüglich der Drehachse (5') radial schräg nach außen geneigt ist, in Drehrichtung (D) nach hinten verläuft und eine sich von der Spitze (9) nach hinten vergrößernde Höhe aufweist.

6. Futtermischer nach einem der Ansprüche 1 bis 5, **dadurch gekennzeichnet, dass** der Strömungsleitkörper (108) eine Deckfläche (15) aufweist, die von einer auf der Tragfläche (7d) aufliegenden Spitzenkante (15a) und mit sich vergrößernder Höhe über der Tragfläche (7d) in Drehrichtung (D) nach hinten verläuft.

7. Futtermischer nach einem der Ansprüche 1 bis 6, **dadurch gekennzeichnet, dass** der Strömungsleitkörper (8) keilförmig ausgebildet ist, eine erste und eine zweite im Wesentlichen dreieckige Leitfläche (10, 11) aufweist, die in einer auf die vorlaufende Kante (7a) ausgerichteten Spitze (9) zusammenlaufen, wobei die radial äußere Leitfläche (10, 210, 310) im Wesentlichen aufrecht auf der Tragfläche (7) steht und die radial innere Leitfläche (11) von innen unten nach radial außen oben geneigt ist.

8. Futtermischer nach einem der Ansprüche 1 bis 7, **dadurch gekennzeichnet, dass** die Querschnittsfläche des Strömungsleitkörpers (8) sich mit zunehmenden Abstand von der Spitze (9) nach hinten vergrößert und mit zunehmenden Abstand von der Leitfläche (10) radial nach innen verkleinert.

9. Futtermischer nach einem der Ansprüche 1 bis 8, **dadurch gekennzeichnet, dass** die Leitfläche (10) im Wesentlichen eben verläuft.

10. Futtermischer nach einem der Ansprüche 1 bis 8, **dadurch gekennzeichnet, dass** die Leitfläche (210, 310) gekrümmt verläuft.

11. Futtermischer nach einem der Ansprüche 1 bis 10, **dadurch gekennzeichnet, dass** der Strömungsleitkörper (108) eine Deckfläche (15) aufweist, die von einer auf der Tragfläche (7d) aufliegenden Spitzenkante (15a) und mit sich vergrößernder Höhe über der Tragfläche (7d) in Drehrichtung (D) nach hinten verläuft.

12. Futtermischer nach einem der Ansprüche 1 bis 11, **dadurch gekennzeichnet, dass** der Strömungsleitkörper (8) einstellbar ist.

13. Futtermischer nach einem der Ansprüche 1 bis 12, **dadurch gekennzeichnet, dass** der Strömungsleitkörper (408) einstückig mit der Tragfläche (7d) ausgebildet und aus der Tragfläche herausgeformt ist.

14. Futtermischer nach einem der Ansprüche 1 bis 13, **dadurch gekennzeichnet, dass** die Mischschnecke (5) mit am Umfang angeordneten Messerelementen (6) versehen ist.

15. Futtermischer nach einem der Ansprüche 1 bis 13, **dadurch gekennzeichnet, dass** die Tragfläche (7d) mit dem Strömungsleitkörper (8, 108, 208, 308, 408) unter der Mischschnecke (5) vorsteht.

## Claims

1. A feed mixer (1) having a receptacle (3) with a side wall (3a) and a floor (3b), a mixing screw (5), which is rotatable about an axis (5') extending substantially perpendicular to the floor (3b), and with a support surface (7d) associated with the mixing screw (5), which sweeps over the floor (3b) with a leading edge (7a) and from which there projects upwards a flow guiding body (8, 108, 208, 308, 408) with a guide surface (10, 210, 310) and a tip (9), **characterised in that** the guide surface (10, 210, 310) points substantially radially outwards relative to the axis (5') and the tip (9) is directed towards the leading edge (7a) and rests on the support surface (7d), and the flow guiding body (8, 108, 208, 308, 408) extends backwards with increasing height (h) over the support surface (7d) in the direction of rotation (D).

2. A feed mixer according to claim 1, **characterised in that** the guide surface (10, 210, 310) exhibits the smallest distance from the axis (5') at the tip (9).

3. A feed mixer according to claim 1 or claim 2, **characterised in that** the guide surface (10, 210, 310) points substantially towards the middle of the leading edge (7a).

4. A feed mixer according to any one of claims 1 to 3, **characterised in that** the guide surface (10, 210, 310) extends from the leading edge (7a) substantially as far as a radially outer boundary edge (7c) of the support surface (7d).

5. A feed mixer according to any one of claims 1 to 4, **characterised in that** the flow guiding body (8) comprises a further guide surface (11), which is defined by base and ridge lines (11a 12) converging in a tip (9), points towards the axis of rotation (5'), is inclined radially obliquely outwards relative to the axis of rotation (5'), extends backwards in the direction of rotation (D) and exhibits a height which increases backwards from the tip (9).

6. A feed mixer according to any one of claims 1 to 5, **characterised in that** the flow guiding body (108) comprises a top surface (15), which extends backwards from a tip edge (15a) lying on the support surface (7d) and with increasing height over the support surface (7d) in the direction of rotation (D).

7. A feed mixer according to any one of claims 1 to 6, **characterised in that** the flow guiding body (8) is of wedge-shaped construction and comprises first and second substantially triangular guide surfaces (10, 11), which converge in a tip (9) oriented towards the leading edge (7a), the radially outer guide surface (10, 210, 310) standing substantially upright on the support surface (7) and the radially inner guide surface (11) being inclined upwards in a radially outward direction from an inner bottom position.

8. A feed mixer according to any one of claims 1 to 7, **characterised in that** the cross-sectional area of the flow guiding body (8) enlarges backwards with increasing distance from the tip (9) and reduces radially inwards with increasing distance from the guide surface (10).

9. A feed mixer according to any one of claims 1 to 8, **characterised in that** the guide surface (10) extends in substantially planar manner.

10. A feed mixer according to any one of claims 1 to 8, **characterised in that** the guide surface (210, 310) extends in curved manner.

11. A feed mixer according to any one of claims 1 to 10, **characterised in that** the flow guiding body (108) comprises a top surface (15), which extends backwards from a tip edge (15a) lying on the support surface (7d) and with increasing height over the support surface (7d) in the direction of rotation (D).

12. A feed mixer according to any one of claims 1 to 11, **characterised in that** the flow guiding body (8) is adjustable.

13. A feed mixer according to any one of claims 1 to 12, **characterised in that** the flow guiding body (408) is constructed in one-piece with the support surface (7d) and is formed out of the support surface.

14. A feed mixer according to any one of claims 1 to 13, **characterised in that** the mixing screw (5) is provided with cutter elements (6) arranged at the circumference.

15. A feed mixer according to any one of claims 1 to 13, **characterised in that** the supporting surface (7d) with the flow guiding body (8, 108, 208, 308, 408) projects below the mixing screw (5).

## Revendications

1. Mélangeur d'aliments pour animaux (1) avec un récipient (3) pourvu d'une paroi latérale (3a) et d'un fond (3b), une vis mélangeuse (5) qui est apte à tourner sur un axe (5') globalement perpendiculaire au fond (3b), et une surface portante (7d) qui est associée à la vis mélangeuse (5), qui balaie avec une arête avant (7a) le fond (3b) et d'où dépasse vers le haut un corps de guidage d'écoulement (8, 108, 208, 308, 408) avec une surface de guidage (10, 210, 310) et une pointe (9), **caractérisé en ce que** la surface de guidage (10, 210, 310) est dirigée globalement radialement vers l'extérieur, par rapport à l'axe (5'), et la pointe (9) est dirigée vers l'arête avant (7a) et est posée sur la surface portante (7d), et le corps de guidage d'écoulement (8, 108, 208, 308, 408) s'étend au-dessus de la surface portante (7d) vers l'arrière, dans le sens de rotation (D), avec une hauteur (h) croissante.

2. Mélangeur d'aliments pour animaux selon la revendication 1, **caractérisé en ce que** la surface de guidage (10, 210, 310) présente au niveau de la pointe (9) la plus petite distance par rapport à l'axe (5').

3. Mélangeur d'aliments pour animaux selon la revendication 1 ou 2, **caractérisé en ce que** la surface de guidage (10, 210, 310) est dirigée globalement vers le milieu de l'arête avant (7a).

4. Mélangeur d'aliments pour animaux selon l'une des revendications 1 à 3, **caractérisé en ce que** la surface de guidage (10, 210, 310) va de l'arête avant (7a) globalement jusqu'à une arête de délimitation radialement extérieure (7c) de la surface portante (7d).

5. Mélangeur d'aliments pour animaux selon l'une des revendications 1 à 4, **caractérisé en ce que** le corps de guidage d'écoulement (8) présente une autre surface de guidage (11), qui est définie par une ligne de base et une ligne de faîte (11a, 12) qui se rejoignent en une pointe (9), qui est dirigée vers l'axe de rotation (5'), qui est inclinée radialement en biais vers l'extérieur par rapport à l'axe de rotation (5'), qui s'étend vers l'arrière, dans le sens de rotation (D), et qui présente une hauteur qui va en augmentant de la pointe (9) vers l'arrière.

6. Mélangeur d'aliments pour animaux selon l'une des revendications 1 à 5, **caractérisé en ce que** le corps de guidage d'écoulement (108) présente une surface de recouvrement (15) qui s'étend au-dessus de la surface portante (7d) vers l'arrière, dans le sens de rotation (D), à partir d'une arête de pointe (15a) posée sur ladite surface portante (7d), et avec une hauteur croissante au-dessus de celle-ci.

7. Mélangeur d'aliments pour animaux selon l'une des revendications 1 à 6, **caractérisé en ce que** le corps de guidage d'écoulement (8) est cunéiforme et présente des première et seconde surfaces de guidage (10, 11) globalement triangulaires qui se rejoignent en une pointe (9) dirigée vers l'arête avant (7a), étant précisé que la surface de guidage radialement extérieure (10, 210, 310) est globalement verticale sur la surface portante (7) et que la surface de guidage radialement intérieure (11) est inclinée de l'intérieur, en bas, radialement vers l'extérieur, en haut.

8. Mélangeur d'aliments pour animaux selon l'une des revendications 1 à 7, **caractérisé en ce que** la surface de section transversale du corps de guidage d'écoulement (8) augmente vers l'arrière en s'éloignant de la pointe (9), et diminue radialement vers l'intérieur en s'éloignant de la surface de guidage (10).

9. Mélangeur d'aliments pour animaux selon l'une des revendications 1 à 8, **caractérisé en ce que** la surface de guidage (10) a une forme plane.

10. Mélangeur d'aliments pour animaux selon l'une des revendications 1 à 8, **caractérisé en ce que** la surface de guidage (210, 310) a une forme courbe.

11. Mélangeur d'aliments pour animaux selon l'une des revendications 1 à 10, **caractérisé en ce que** le corps de guidage d'écoulement (108) présente une surface de recouvrement (15) qui s'étend au-dessus de la surface portante (7d) vers l'arrière, dans le sens de rotation (D), à partir d'une arête de pointe (15a) posée sur ladite surface portante (7d) et avec une hauteur croissante.

12. Mélangeur d'aliments pour animaux selon l'une des revendications 1 à 11, **caractérisé en ce que** le corps de guidage d'écoulement (8) est réglable.

13. Mélangeur d'aliments pour animaux selon l'une des revendications 1 à 12, **caractérisé en ce que** le corps de guidage d'écoulement (408) est réalisé d'une seule pièce avec la surface portante (7d) et dépasse de celle-ci.

14. Mélangeur d'aliments pour animaux selon l'une des revendications 1 à 13, **caractérisé en ce que** la vis mélangeuse (5) est pourvue d'éléments formant lames (6) disposés sur sa circonférence.

15. Mélangeur d'aliments pour animaux selon l'une des revendications 1 à 13, **caractérisé en ce que** la surface portante (7d) dépasse avec le corps de guidage d'écoulement (8, 108, 208, 308, 408) de la vis mélangeuse (5), sous celle-ci.
